(19) Europäisches Patentamt
European Patent Office
Office européen des brevets

(11) **EP 3 495 121 A1**

(12) **EUROPEAN PATENT APPLICATION**
published in accordance with Art. 153(4) EPC

(43) Date of publication:
**12.06.2019 Bulletin 2019/24**

(51) Int Cl.:
**B29C 70/10** (2006.01)     **G06F 17/50** (2006.01)

(21) Application number: **17837032.6**

(22) Date of filing: **02.08.2017**

(86) International application number:
**PCT/JP2017/028124**

(87) International publication number:
**WO 2018/025930 (08.02.2018 Gazette 2018/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.08.2016 JP 2016152913**

(71) Applicant: **R-Flow Co., Ltd.**
**Soka-shi, Saitama 340-0015 (JP)**

(72) Inventor: **TAKEDA Hiroshi**
**Soka-shi**
**Saitama 340-0015 (JP)**

(74) Representative: **Fédit-Loriot**
**38, avenue Hoche**
**75008 France (FR)**

(54) **METHOD FOR DERIVING BUCKLING CONDITION OF FIBERS MOVING IN FLUID, BREAKING CONDITION CALCULATION METHOD, AND FIBER LENGTH DISTRIBUTION PREDICTION METHOD**

(57)     In a method of deriving the buckling condition of a cylindrical fiber moving in a fluid, a method of calculating the breakage condition thereof, and a method of forecasting the fiber length distribution, the flow field around a cylindrical fiber in a contraction flow is determined by a stricter method.

The method of deriving the buckling condition, which is a condition under which buckling occurs, of a cylindrical fiber moving in a fluid, includes the step of multiplying a dimensionless fluid stress distribution, uniquely determined with regard to the aspect ratio $r_0'$ of the cylindrical fiber, by $\mu k$ (where $\mu$ represents fluid viscosity and k represents the contraction rate (velocity gradient in the length direction at the location where the fiber is present)) at a location where the cylinder is present, to obtain the fluid stress distribution acting on the cylinder surface in a contraction flow, and the step of using a minimum eigenvalue $\lambda_0$, which is the threshold for buckling derived from the fluid stress distribution on the cylinder surface, to derive the buckling condition, wherein the buckling condition is represented by $\mu k \geq -(\lambda_0 E r_0'^4 \log r_0'')/4$ (where E is Young's modulus and $r_0'$ is the aspect ratio of the cylinder).

Fig. 5

**Description**

Technical Field

The present invention relates to a buckling condition derivation method, breakage condition calculation method, and fiber length distribution forecasting method for fibers moving in a fluid.

Background Art

Fiber-reinforced plastics are being used in a variety of fields in recent years. Because the strength of a fiber-reinforced plastic is dependent on its microstructural fiber configuration, including fiber dispersion, orientation, and length, it is important to assess and control the microscopic states of fibers in plastics produced through molding processes. A wide variety of efforts have been made to forecast the dispersion and orientation of fibers in high-viscosity fluid through simulations in order to assess such microscopic states of fibers (see Nonpatent Documents 1 and 2). Meanwhile, although it is necessary to analyze fiber breakage processes in flows in order to forecast fiber length, quantitative evaluation of fiber breakage is difficult, and prediction of fiber length through simulation has not yet been attained.

Predictive analysis of orientation and breakage of fibrous objects moving in a flow has been attempted by Yamamoto et al. (see Nonpatent Documents 3 to 7). In the analysis of Yamamoto et al., a fiber is represented as a combination of spherical particles, and fluid resistance acting on individual spherical particles in a flow is summed up to calculate the force acting on a fibrous object.

Phelps et al. have derived the condition under which a cylindrical fiber buckles in a contraction flow by using an approximate solution with regard to fluid stress acting on a slender cylinder in a contraction flow (see Nonpatent Documents 8 and 9). The derived buckling condition model has been incorporated into molding software (see Nonpatent Document 10).

Citation List

Nonpatent Documents

Nonpatent Document 1: Okada, Y. and R. Nakano: Seikei-Kakou, 27, 134 (2015)
Nonpatent Document 2: Masaki, S., A. Nakayama, and T. Kajiwara: Seikei-Kakou, 27, 533 (2015)
Nonpatent Document 3: Yamamoto, S. and T. Matsuoka: J. Chem. Phys., 98, 644 (1993)
Nonpatent Document 4: Yamamoto, S. and T. Matsuoka: Polymer Eng. Sci., 35, 1022 (1995)
Nonpatent Document 5: Yamamoto, S.: R&D review of Toyota CRDL, 33, 63 (1998)
Nonpatent Document 6: Yamamoto, S. and T. Matsuoka: Seikei-Kakou, 11, 510 (1999)
Nonpatent Document 7: Yamamoto, S.: Journal of the Society of Rheology, Japan, 29, 185 (2001)
Nonpatent Document 8: Phelps, J. H.: Ph.D. Thesis, University of Illinois at Urbana-Champaign, IL 61801 (2009)
Nonpatent Document 9: Phelps, J. H., A.I.A. El-Rahman, V. Kunc and C.L. Tucker III: Composites: Part A, 51, 11 (2013)
Nonpatent Document 10: Nguyen, B.N., X. Jin, J. Wang, J. H. Phelps, C. L. Tucker III, V. Kunc, S.K. Bapanapalli and M.T. Smith: FY 2010 Quarterly Report, PNNL-19185, Pacific Northwest National Laboratory (2010)

Summary of Invention

Problems to be Solved by Invention

In the analysis of Yamamoto et al., fibers are expressed as a combination of spherical particles, and the fluid resistance acting on individual spherical particles is summed up to calculate the force of flow acting on the fibrous objects. However, the force acting on an object in a flow generally cannot be expressed by the sum of fluid resistance acting on individual spherical particles that are combined to mimic the object. For example, in the case of an object represented by a combination of spherical particles in a uniform flow, fluid resistance acting on each spherical particle is in proportion to the diameter of the particle in a Stokes region with a low Reynolds number; but meanwhile, fluid resistance acting on the combined particles overall is in inverse proportion to the particle diameter squared, because the number of spherical particles composing the object is in inverse proportion to the particle diameter cubed. In the limit case of particles of zero diameter, fluid resistance acting on the combined particles overall would be infinite. Although a method using such particle combinations can forecast the orientation of fibers in a flow, the problem is that it cannot forecast fiber breakage because it cannot determine the fluid forces acting on fibers.

The derivation process of Phelps et al. involves some theoretical questions, as described later.

An object of the present invention, which has been made in view of these problems, is to calculate the flow field around a cylinder in a contraction flow as addressed by Phelps et al. by a stricter method, and then solve the eigenvalue problem with regard to buckling that is caused by the resulting fluid stress distribution around the cylinder, in order to derive the buckling condition of a cylinder placed in a contraction flow. Another object is to provide a method of using the buckling condition to calculate the breakage condition, and a method of forecasting fiber length distribution.

Means for Solving Problems

A first aspect of the present invention to solve the problems described above provides a method of calculating a buckling condition, which is a condition under which buckling occurs, of a cylindrical fiber moving in a fluid when placed in a contraction flow, which is a flow toward a shrinkage in the longitudinal direction of the fiber. The buckling condition derivation method includes the step of multiplying a dimensionless fluid stress distribution, uniquely determined with regard to the aspect ratio $r_0'$ of the cylindrical fiber, by $\mu k$ (where $\mu$ represents fluid viscosity and k represents the contraction rate (velocity gradient in the length direction at the location where the fiber is present)) at a location where the cylinder is present, to obtain the fluid stress distribution acting on the cylinder surface in a contraction flow, and the step of using a minimum eigenvalue $\lambda_0$, which is the threshold for buckling derived from the fluid stress distribution on the cylinder surface, to derive the buckling condition. The buckling condition is represented by the following equation (where E is Young's modulus and $r_0'$ is the aspect ratio of the cylinder).

$$\mu k \geq -\frac{\lambda_0}{4} E\, r_0'^4 \log r_0'$$

A second aspect of the present invention to solve the problems described above provides a method that uses the buckling condition described in the first aspect of the present invention to calculate a breakage condition, which is a condition under which breakage occurs, of a cylindrical fiber. The breakage condition derivation method includes the step of writing the value of $\mu k$ when the buckling condition holds equality as $\mu k_{bu}$, the step of writing the value of $\mu k$ when the cylindrical fiber breaks as $\mu k_{br}$ and writing the ratio of $\mu k_{br}$ to $\mu k_{bu}$ as a threshold $r_{br} = \mu k_{br}/\mu k_{bu}$, the step of taking the threshold $r_{br}$ as a fitting parameter and setting $r_{br}$ to match experimental results or setting $r_{br}$ based on structural analysis of fiber breakage incorporating a breakage model, and the step of determining the value of $\mu k_{br}$ at breakage by replacing $\mu k$ with $\mu k_{br}/r_{br}$ and replacing the inequality sign with the equality sign in the buckling condition. The breakage condition is represented by the following equation.

$$\mu k_{br} = -\frac{\lambda_0}{4} r_{br} E\, r_0'^4 \log r_0'$$

A third aspect of the present invention to solve the problems described above provides a method that uses the breakage condition described in the second aspect of the present invention to forecast fiber length distribution, which is the distribution of cylindrical fiber lengths. The fiber length distribution forecasting method includes the step of determining a maximum value $\mu k_{max}$ among historical data of $\mu k$ up to a predetermined measuring point, and the step of calculating the cylindrical fiber's aspect ratio $r_0'_{max}$ by assigning the maximum value $\mu k_{max}$ to the breakage condition $\mu k_{br}$. Cylindrical fiber diameter $d_f$ is then used to determine fiber length before breakage $d_f/r_0'_{max}$ and fiber length after breakage $d_f/(2r_0'_{max})$.

Advantageous Effects of Invention

In the present invention, the flow field around a cylinder in a contraction flow as addressed by Phelps et al. is calculated by a stricter approach, and the eigenvalue problem with regard to buckling that is caused by the resulting fluid stress distribution around the cylinder is solved, providing a method of calculating the buckling condition for a cylinder placed in a contraction flow, and thereby providing a method of calculating the buckling condition, a method of calculating the breakage condition, and a method of forecasting fiber length distribution for a fiber moving in a fluid. Other advantageous effects of the present invention will be described in the embodiment below.

Brief Description of Drawings

Fig. 1 illustrates flow velocity distribution in a contraction flow around a cylinder of $r_0$' = 1/50. The distribution is calculated by CFD, using a model of plane symmetry about a z' = 0 plane and axial symmetry. The left side in the drawing represents dimensionless flow velocity distribution, and the right side represents the velocity component contour in the z' direction. The drawing shows the flow velocity distribution deviating from the main flow excluding the contraction flow (main flow) when no cylinder is present.

Fig. 2 is a graph illustrating a dimensionless velocity gradient f(z') = $\delta v_z$'/$\delta r$' (solid line) in the r' direction on the surface of the cylinder, calculated from the flow velocity distribution of Fig. 1. The broken line shows the velocity gradient of Equation (14) after it is made dimensionless.

Fig. 3 is a schematic view illustrating the symbols used in buckling analysis of a cylinder in a contraction flow.

Fig. 4 illustrates the distribution of the eigenfunction $\delta$(z') corresponding to the minimum eigenvalue $\lambda_0$ = 5.09 determined by numeric calculation, normalized such that the maximum value of $\delta$ is 1, and $\delta$ = 0 at z' = ±1.

Fig. 5 shows an example of a result of analysis when coupled-dyad particles pass through a clearance in the flow velocity distribution of the upper drawing. The shading in the upper drawing indicates the velocity gradient (flow contraction/extension rate k) in the coupling direction, determined from the flow velocity at the position of each particle of the coupled-dyad particles. Here, positive values indicate contraction flow, and negative values indicate extension flow.

Fig. 6 is a schematic view of an experimental device used by Phelps et al. to measure fiber length distribution.

Fig. 7 illustrates a result of flow analysis at the disk of the experimental device shown in Fig. 6. The upper drawing shows flow velocity distribution, and the lower drawing shows viscosity distribution.

Fig. 8 shows fiber length distribution at point A of the device shown in Fig. 6 as determined from the present fiber breakage forecasting theory (solid line), in comparison with the experimental data of Phelps et al. (bar graph).

Embodiment of Invention

A preferred embodiment of the present invention will now be described in detail, with reference to the accompanying drawings. Throughout the specification and drawings, components having substantially the same functions are identified by the same symbols, without redundant description.

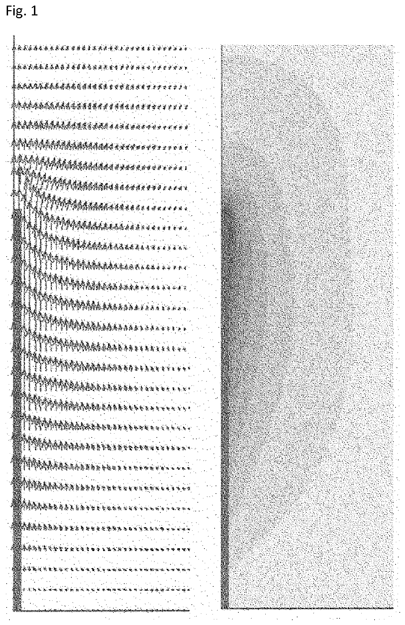

(1) An embodiment of the present invention will now be described with reference to Figs. 1 to 8.

The following description refers to Nonpatent Documents 1 to 10 and, additionally, to Nonpatent Documents 11 to 20.

Nonpatent Document 11: Tatsumi, T.: Ryutai Rikigaku (Fluid Dynamics), Baifukan Co., Ltd. (1982)
Nonpatent Document 12: Yoshizawa, B.: Ryutai Rikigaku (Fluid Dynamics), University of Tokyo Press (2001)
Nonpatent Document 13: Forgacs, O.L. and S.G. Mason: J. Colloid Interface Sci., 14, 457 (1959)
Nonpatent Document 14: Forgacs, O.L. and S.G. Mason: J. Colloid Interface Sci., 14, 473 (1959)
Nonpatent Document 15: Salinas, A. and J.F.T. Pittman: Polymer Eng. Sci. 21, 23 (1981)
Nonpatent Document 16: von Turkovich, R. and L. Erwin: Polymer Eng. Sci. 23, 743 (1983)
Nonpatent Document 17: Nakamura, K.: Hinyuton Ryutai Rikigaku (Non-Newtonian Fluid Dynamics), Corona Publishing Co., Ltd. (1997)
Nonpatent Document 18: Dinh, S.M. and R.C. Armstrong: J. Rheology, 28, 207 (1984)
Nonpatent Document 19: Jeffery, G.B.: Proc. R. Soc. London, Ser. A, 102, 161 (1922)
Nonpatent Document 20: Advani, S.G. and C.L. Tucker III: J. Rheology, 31, 751 (1987)

(2) Flow field addressed

In general, the Stokes approximation holds for a flow around a fiber moving in a high-viscosity fluid, and viscosity is regarded as approximately constant near the fiber. Under such conditions, the governing equation of flow around the fiber is linear, as follows (see Nonpatent Documents 11 and 12).

$$\nabla p = \mu \nabla^2 v, \quad \nabla \cdot v = 0 \qquad (1)$$

Here, v is the flow velocity vector, p is fluid pressure, and $\mu$ is viscosity. Flow is examined in a coordinate system that moves together with the fiber, and the time-derivative term is neglected in Equation (1). Here, a Taylor series is used to expand the flow field around the slender fibrous object, centered on the fiber center $x_0$, as shown in Equation (2) below. Here, the subscripts i (i = 1, 2, 3), j (j = 1, 2, 3) represent the (x, y, z) components of the vector. Since the flow governing equation (1) is linear, flow fields can be superposed, and the flow fields can be examined separately for each term of the Taylor expansion.

$$v_i\left(x_j\right) = v_i\left(x_{0j}\right) + \frac{\partial v_i}{\partial x_j}\left(x_j - x_{0j}\right) + \cdots \qquad (2)$$

The first term on the right-hand side in Equation (2) represents a uniform flow moving at the moving velocity $v_0$ of the fiber, and can be neglected in view of the coordinate system that moves together with the fiber. Within the second term on the right-hand side, the term representing shear deformation among nine velocity gradient tensor components represents rotational flow around the center $x_0$, and can be neglected in view of the rotational system that rotates together with the fiber. The remaining velocity gradient tensor components correspond to extension flow or contraction flow in the longitudinal direction of the slender fiber. Contraction flow is thought to be a factor causing fiber breakage, as others have already pointed out (see Nonpatent Documents 13 to 16). This embodiment examines fluid stress acting on a slender cylinder mimicking a fiber, placed in a contraction flow where the uniform flow and rotational flow components are excluded from the flow field around the fiber.

The contraction (extension) flow is generally represented by the following flow velocity distribution (see Nonpatent Document 17).

$$v_z = -kz, \qquad v_x = \frac{1+m}{2}kx, \qquad v_y = \frac{1-m}{2}ky \qquad (3)$$

Here, $(v_x, v_y, v_z)$ are the (x, y, z) components of the flow velocity, and the flow is considered to contract from z = $\pm\infty$ toward z = 0. The velocity gradient in the z direction is k, which corresponds to the contraction rate (if k < 0, the extension rate). The velocity components $(v_x, v_y)$ perpendicular to the contraction direction (z) are dependent on a parameter m ($0 \leq m \leq 1$), where there is axisymmetric flow at m = 0 and plane flow at m = 1. Since buckling is caused by fluid stress acting on the cylinder surface in the z direction, and the effect of $(v_x, v_y)$ is considered to be secondary, differences in $(v_x, v_y)$ due to differing m values are neglected. Based on these considerations, flow around an slender cylinder having the z axis as its central axis placed in an axisymmetric contraction flow (Equation 4) at m = 0 is discussed in Section (3), "Distribution of fluid stress acting on a cylinder in a contraction flow." The formulation of Phelps et al. also assumes a similar axisymmetric contraction flow.

$$v_z = -kz, \qquad v_x = \frac{k}{2}x, \qquad v_y = \frac{k}{2}y, \qquad v_r = \frac{k}{2}r \qquad (4)$$

(3) Distribution of fluid stress acting on a cylinder in a contraction flow

Flow around a cylinder having radius $r_0$ and length 2l placed in an axisymmetric contraction flow represented by Equation (4) is considered, where the central axis of the cylinder is the z axis having a middle point at z = 0. The governing equation of flow is Equation (1), and the boundary conditions at the cylinder's surface and infinity are expressed as follows.

$$\boldsymbol{v} = 0 \quad (r = r_0 \text{ and } |z| \leq l) \quad \text{(side face of column)} \qquad (5a)$$

$$\boldsymbol{v} = 0 \quad (r \leq r_0 \text{ and } |z| = l) \quad \text{(two end faces of column)} \qquad (5b)$$

$$v_r = \frac{k}{2}r, \; v_z = -kz \quad (r = \infty \text{ or } |z| = \infty) \quad \text{(infinite)} \qquad (5c)$$

Although the following development of the formula can be applied to either contraction flow (k > 0) or extension flow (k < 0), the following description is based on contraction flow (k > 0), which is thought to be a direct factor in fiber breakage. Equation (1) and Boundary conditions (5) are made dimensionless, as follows.

$$(x, y, z, r) = (x', y', z', r')l, \quad \nabla = \nabla'/l, \quad \boldsymbol{v} = \boldsymbol{v}'U, \quad p = p'\frac{\mu U}{l}$$

$$U = kl, \quad r_0' = \frac{r_0}{l}$$

Therefore, Equation (6) is as follows.

$$\nabla p' = \nabla'^2 \boldsymbol{v}' \tag{6a}$$

$$\nabla' \cdot \boldsymbol{v}' = 0 \tag{6b}$$

$$\boldsymbol{v}' = 0 \quad (r' = r_0' \text{ and } |z'| \le 1) \tag{6c}$$

$$\boldsymbol{v}' = 0 \quad (r' \le r_0' \text{ and } |z'| = 1) \tag{6d}$$

$$v_r' = \frac{r'}{2}, \quad v_z' = -z' \ (r' = \infty \text{ or } |z'| = \infty) \tag{6e}$$

Since the only parameter included in Equation (6) is the aspect ratio $r_0' = r_0/l$ of the cylinder, including the boundary conditions, the dimensionless flow field (flow velocity and pressure) obtained by solving Equation (6) is only dependent on $r_0'$.

(3-1) Numerical solution for flow around a cylinder in a contraction flow

Equation (6) can be solved by computational fluid dynamics (CFD). Fig. 1 illustrates the results (dimensionless flow velocity distribution and velocity component distribution in the z' direction) of the solution of Equation (6) under the conditions of plane symmetry about plane z'= 0 and axial symmetry using R-FLOW, which is commercial software developed by the applicant for fluid and powder analysis. This is the case where $r_0' = 1/50$.

Since Equation (6) is only dependent on $r_0'$, the resulting dimensionless flow velocity distribution ($v_r''$, $v_z''$) or ($v_r'$, $v_z'$) remains unchanged until $r_0'$ varies. After flow velocity and pressure distribution around the cylinder are determined as shown in Fig. 1, the velocity gradient on the cylinder surface and pressure distribution on the two ends of the cylinder, which are essential for calculating fluid stress distribution on the cylinder surface, can be obtained.

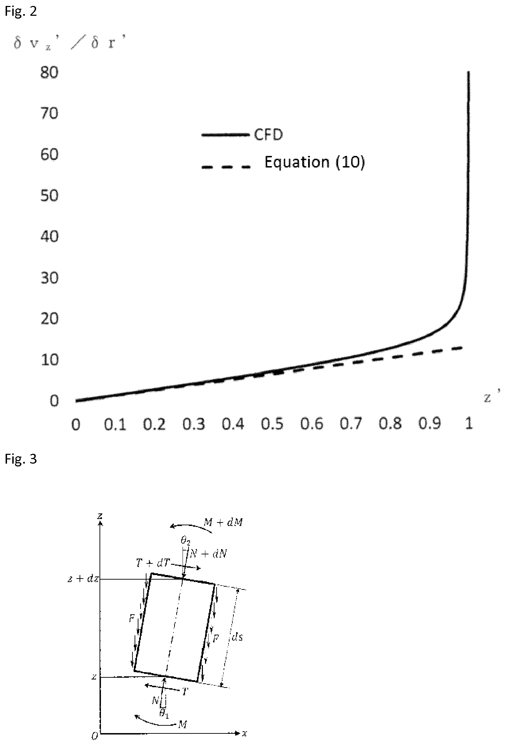

Fig. 2 is a graph plotting the dimensionless velocity gradient function as a function of z' in the r' direction on the cylinder surface, f(z') = $\delta v_z'/\delta r'$. Because the function f(z') remains unchanged until $r_0'$ varies, f(z') only needs to be obtained once for the same value of $r_0'$. Similarly, the dimensionless fluid pressure p' acting on the two ends of the cylinder and the velocity gradient for determining viscous stress are also expressed as a function of r'; hence, the dimensionless fluid stress toward the center of the overall plane is calculated by integration of the dimensionless pressure and velocity gradient over the plane where r' ≤ $r_0'$. Integration of the dimensionless pressure and velocity gradient needs to be performed numerically, and because the value of the integral is also only dependent on $r_0'$, the integral also needs to be calculated only once.

For the viscous stress $\mu \delta v_z/\delta r$ acting on the side of a cylinder in an actual flow, the dimensionless velocity gradient of Fig.2 is made dimensional by multiplying by the contraction rate k, and this is multiplied by the viscosity $\mu$, as represented by Equation (7).

$$\mu \frac{\partial v_z}{\partial r}_{(r=r_0)} = \frac{\mu U}{l} \frac{\partial v_z{}'}{\partial r'}_{(r'=r_0')} = \mu k f(z') \qquad (7)$$

Similarly, the fluid stress acting on the two ends of the cylinder can be determined by the product of the dimensionless pressure, the velocity gradient, and $\mu$k.

As described above, the fluid stress distribution acting on the surface of a cylinder in a contraction flow can be determined by the product of the dimensionless fluid stress distribution unique to the aspect ratio $r_0'$ of a given cylinder and $\mu$k at the position of the cylinder. The dimensionless velocity gradient on the surface and the pressure at the two ends of the cylinder shown in Fig. 2 only needs to be determined one time for a given $r_0'$ value.

(3-2) Theoretical solution for flow around a cylinder excluding the two end regions

In the case of a cylinder that is sufficiently slender, i.e., having a sufficiently low aspect ratio ($r_0' = r_0/l << 1$), the effect of the two ends on flow around the cylinder disappears, except near the two ends. To determine axisymmetric flow around the cylinder in a case where the effects of the two ends can be neglected, Governing equation (1) is rewritten using the Stokes stream function $\phi(r,z)$ as follows.:

$$D^4 \varphi = 0 \qquad (8a)$$

$$D^2 = r \frac{\partial}{\partial r} \left( \frac{1}{r} \frac{\partial}{\partial r} \right) + \frac{\partial^2}{\partial z^2}$$

$$v_r = -\frac{1}{r} \frac{\partial \varphi}{\partial z}, \qquad v_z = \frac{1}{r} \frac{\partial \varphi}{\partial r} \qquad (8b)$$

$$v_r = v_z = 0 \ (r = r_0), \qquad v_r = \frac{k}{2} r \ (r = \infty), \qquad v_z = -kz \ (r = \infty) \qquad (8c)$$

In order to solve Equation (8), the following equation is written.

$$\varphi(r,z) = z f(r)$$

For f(r), Equation (9) is thereby obtained.

$$\frac{d}{dr} \left( \frac{1}{r} \frac{d}{dr} \left( r \frac{d}{dr} \left( \frac{1}{r} \frac{df}{dr} \right) \right) \right) = 0 \qquad (9)$$

Equation (9) is integrated to obtain Equation (10) for f(r).

$$f(r) = c_1 r^4 + c_2 r^2 \left( \log r' - \frac{1}{2} \right) + c_3 r^2 + c_4 \qquad (10)$$

Here, c1, c2, c3, and c4 are integral constants. From Equation (8b), the velocity components ($v_r$, $v_z$) are derived as follows.

$$v_r = -\frac{f}{r} = -c_1 r^3 - c_2 r \left(\log r' - \frac{1}{2}\right) - c_3 r - \frac{c_4}{r} \qquad (11a)$$

$$v_z = \frac{z}{r}\frac{df}{dr} = z(4c_1 r^2 + 2c_2 \log r' + 2c_3) \qquad (11b)$$

Here, $r'= r/l$. The integral constants c1, c2, c3, and c4 are determined for $(v_r, v_z)$ by the boundary conditions (8c). However, the Stokes approximation is known to include solutions that increase logarithmically at infinity (Stokes' paradox) (see Nonpatent Documents 11 and 12). Therefore, only $c_1$ is written as 0 from the boundary condition at infinity, and $c_2$ is determined from the boundary condition of the surface of the cylinder. The integral constants are determined as follows from the boundary conditions.

$$c_1 = 0, \qquad c_2 = \frac{k}{2 \log r_0'}, \qquad c_3 = -\frac{k}{2}, \qquad c_4 = kr_0^2\left(\frac{1}{4 \log r_0'} - 1\right) \qquad (12)$$

Flow velocity distribution is then determined as follows.

$$v_r = \frac{k}{2}r - \frac{k}{2 \log r_0'}\left(\log r' - \frac{1}{2}\right)r - \left(\frac{1}{4 \log r_0'} - 1\right)\frac{kr_0^2}{r} \qquad (13a)$$

$$v_z = -kz + \frac{\log r'}{\log r_0'}kz \qquad (13b)$$

In the flow velocity represented by Equation (13), the first terms on the right side (kr/2, -kz) correspond to a contraction flow in a case where no cylinder is present, i.e., the primary flow; and the rest of the terms on the right side represent deviation from the primary flow. From Equation (13b), the velocity gradient on the surface of the cylinder is obtained in Equation (14).

$$\frac{\partial v_z}{\partial r}_{(r=r_0)} = \frac{k}{r_0' \log r_0'}z \qquad (14)$$

In Fig. 2, the dimensionless velocity gradient represented by Equation (14) is plotted as a broken line in the case where $r_0' = 1/50$. As the graph illustrates, there is not much deviation from the velocity gradient approximated by Equation (14), except near the front end of the cylinder. Considering that the approach of representing a fiber as a cylinder is in itself an approximation, Equation (14) can be used to approximate the velocity gradient in the case of a fiber that is slender to some degree.

(4) Buckling and breakage analysis based on fluid stress acting on a cylinder in a contraction flow

This section will derive the buckling condition of a cylinder in a contraction flow, using fluid stress distribution acting on the surface of the cylinder in the contraction flow as determined in the preceding section. The procedures of buckling and breakage analysis will also be described.

(4-1) Buckling analysis

Euler was the first to analyze the buckling condition in the case of inward forces acting on the two ends of a cylinder, and this analysis is known as Euler buckling. Dinh et al. (Nonpatent Document 16) approximated the fluid stress acting on the surface of a cylinder in a contraction flow, and Phelps et al. (see Nonpatent Document 18) used this approximation to derive the buckling condition for a cylinder in a contraction flow, with reference to the results of Euler buckling. Dinh et al. assumed that the velocity gradient at the surface of the cylinder is in proportion to the contraction rate at a position far from the surface of the cylinder (i.e., a place where the cylinder is not present), calling the proportionality coefficient in this case a "resistance coefficient," but no theoretical derivation was carried out on the resistance coefficient, which remains an uncertain parameter. Thus the buckling condition Phelps et al. derived based on the approximate solution by Dinh et al. also incorporates this same resistance coefficient, which means that it is merely a fitting parameter. In Section (3-2), "Theoretical solution for flow around a cylinder excluding the two end regions," flow velocity distribution is derived in the case of negligible effect of the two ends of the cylinder, and this actually corresponds to a theoretical derivation of the resistance coefficient in the paper by Dinh et al. The "resistance coefficient" in the paper by Dinh et al. is represented by the product of the velocity gradient of Equation (14) and the viscosity. Therefore, the approximate solution by Dinh et al. can be replaced with the solution obtained in Section (3-2), "Theoretical solution for flow around a cylinder excluding the two end regions," to eliminate the uncertain parameter.

The derivation of the buckling condition by Phelps et al. has another problem, in addition to the above. In order to apply the Euler buckling problem as is, Phelps et al. replaced the compressive force caused by flow acting on the center of the cylinder, as determined from the approximate solution by Dinh et al., with the inward forces acting on the two ends of the cylinder in the Euler buckling problem to derive the buckling condition. However, no ground for such replacement is shown. Accordingly, doubt remains concerning the reasonableness of the results of Phelps et al.

In this section, the buckling condition of a cylinder in a contraction flow is derived from fluid stress distribution on the surface of the cylinder in the contraction flow, as obtained in the preceding section, instead of the approximate solution by Dinh et al. Instead of directly incorporating the results of a Euler buckling analysis, as done by Phelps et al., the eigenvalue problem derived using fluid stress distribution on the surface of the cylinder, as determined in the preceding section, is solved to derive the buckling condition.

In determining the buckling condition of a cylinder placed in a contraction flow, as shown in Fig. 3, a minute element having length dz along the central axis (z direction) is removed before the cylinder buckles, and the following equation is obtained, taking into account the balance of forces in a direction perpendicular to the axis (x direction).

$$N \sin \theta_1 - T \cos \theta_1 - (N + dN) \sin \theta_2 + (T + dT) \cos \theta_2 = 0 \qquad (15)$$

Here, the definitions of variables N, dN, T, dT, F, $\theta_1$, $\theta_2$, $\theta$, and ds are as shown in Fig. 3, and F corresponds to a force due to contraction flow per unit length in the z direction acting on the surface of the cylinder. Letting the displacement in the x direction be $\delta$, and assuming that deformation is minute, the following approximations are derived.

$$ds \approx dz, \qquad \cos \theta_1 \approx \cos \theta_2 \approx 1, \qquad \sin \theta_1 \approx \frac{d\delta}{dz}, \qquad \sin \theta_2 \approx \frac{d\delta}{dz} + \frac{d^2\delta}{dz^2} dz$$

Therefore, Equation (15) derives Equation (16).

$$N \frac{d^2\delta}{dz^2} dz + dN \frac{d\delta}{dz} - dT = 0 \qquad (16)$$

Both sides of Equation (16) are divided by dz. Because of the balance of forces in the axial (z) direction, the expression dN ≈ -Fds ≈ -Fdz holds. Based on these facts, Equation (16) derives Equation (17).

$$N \frac{d^2\delta}{dz^2} - F \frac{d\delta}{dz} - \frac{dT}{dz} = 0 \qquad (17)$$

The relationships shown in the following Equation (18) are then used, introducing bending moment M, Young's modulus E, and second moment of area I ($=\pi r_0^4/4$).

$$M = -EI \frac{d^2\delta}{dz^2} \qquad (18a)$$

$$T = \frac{dM}{dz} = -EI \frac{d^3\delta}{dz^3} \qquad (18b)$$

Equation (17) then derives Equation (19).

$$EI \frac{d^4\delta}{dz^4} + N \frac{d^2\delta}{dz^2} - F \frac{d\delta}{dz} = 0 \qquad (19)$$

Because of the balance of forces in the axial direction inside the cylinder, N in Equation (19) is expressed as follows, as a function of the sum P of fluid pressure and viscous stress acting on the end faces of the cylinder, and viscous stress F acting on the side of the cylinder.

$$N(z) = P + \int_z^l F\,dz, \qquad F(z) = -2\pi r_0 \mu \frac{\partial v_z}{\partial r}\bigg|_{(r=r_0)} \qquad (20)$$

The sum P and the velocity component $v_z$ in Equation (20) are calculated using the flow field determined in Section (3), "Fluid stress distribution acting on a cylinder in a contraction flow."

In the case of a cylinder that is sufficiently slender ($r_0'$ << 1) for the velocity gradient on its surface to be approximated by Equation (14), the effects of pressure and viscous stress at the two ends of the cylinder is negligible (P = 0), and thus Equation (20) can be expressed as Equation (21).

$$N(z) = -\frac{\pi\mu k}{\log r_0'}(l^2 - z^2), \qquad F(z) = -\frac{2\pi\mu k}{\log r_0'}z \qquad (21)$$

By substituting Equation (21) into Equation (19), we obtain Equation (22).

$$\frac{d^4\delta}{dz^4} - \frac{\pi\mu k}{EI \log r_0'}\left\{(l^2 - z^2)\frac{d^2\delta}{dz^2} - 2z\frac{d\delta}{dz}\right\} = 0 \qquad (22)$$

The independent variable is converted from z to z' (= z/l). Equation (22) then derives Equation (23).

$$\frac{d^4\delta}{dz'^4} + \lambda \frac{d}{dz'}\left\{(1 - z'^2)\frac{d\delta}{dz'}\right\} = 0 \qquad (-1 \le z' \le 1) \qquad (23a)$$

$$\lambda = -\frac{\pi\mu k l^4}{EI \log r_0'} = -\frac{4\mu k}{E\,r_0'^4 \log r_0'} \qquad (23b)$$

The boundary condition for Equation (23) is a condition where the two ends of the cylinder are free ends; in other words, bending moment is zero, and shear force in the x direction at the two ends of the cylinder is zero. For the boundary condition that bending moment is zero, Equation (24) is derived from Equation (18a).

$$\frac{d^2\delta}{dz'^2} = 0 \quad (z' = \pm 1) \qquad (24)$$

Although shear force in the x direction is generally expressed as a linear combination of T and P, the value of P can be zero for a sufficiently slender cylinder; hence, the shear force equals T. As a result, the boundary condition of zero shear force in the x direction is represented by T = 0, and Equation (18b) is used to derive Equation (25).

$$\frac{d^3\delta}{dz'^3} = 0 \quad (z' = \pm 1) \qquad (25)$$

Differential Equation (23), along with boundary conditions (24) and (25), is an eigenvalue problem where $\lambda$ is an eigenvalue, and the eigenvalue and the eigenfunction $\delta(z')$ are obtained by numerically solving Equations (23), (24), and (25). If $\lambda_0$ is the minimum eigenvalue, the actual value of $\lambda_0$ determined by numerical calculation is 5.09.

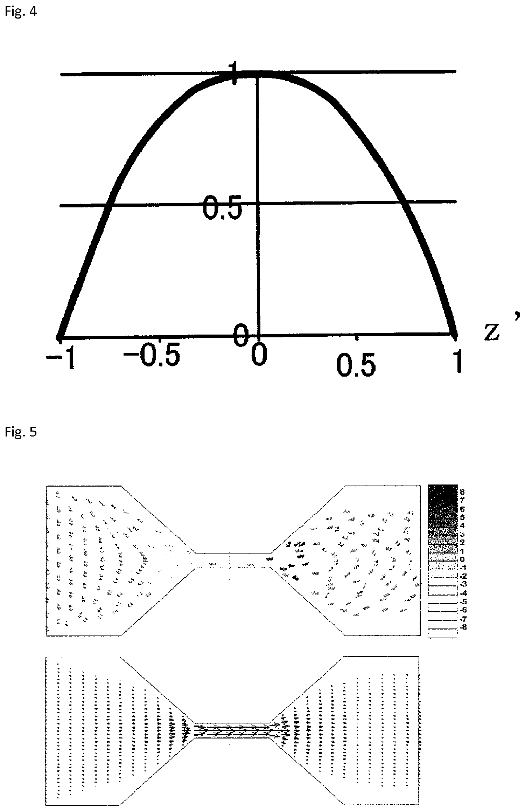

Fig. 4 illustrates the distribution of corresponding eigenfunction $\delta(z')$. Here, the function is normalized such that the maximum value of $\delta$ is 1, and $\delta = 0$ (at $z' = \pm 1$). As illustrated by the eigenfunction distribution in Fig. 4, displacement $\delta$ is greatest at the center of the cylinder, so when fluid stress exceeds the minimum eigenvalue, the cylinder will buckle by folding in two at its center.
The buckling condition corresponding to Euler's buckling condition is derived by using Equation (23b) and the minimum eigenvalue of $\lambda_0$, such that $\lambda \geq \lambda_0$, and is represented by Equation (26) or (27).

$$\lambda = -\frac{4\mu k}{E\, r_0'^4 \log r_0'} \geq \lambda_0 \qquad (26)$$

$$\mu k \geq -\frac{\lambda_0}{4} E\, r_0'^4 \log r_0' \qquad (27)$$

Unlike the buckling condition equation obtained by Phelps et al. using the approximate solution of Dinh et al., Equation (27) does not incorporate uncertain parameters such as a resistance coefficient.

(4-2) Forecast of fiber buckling using fiber orientation analysis

The buckling condition of a cylinder in a contraction flow as determined in Section 3 can be applied to the results of fiber orientation analysis to forecast the position within a flow at which the cylindrical fiber will buckle.
There are two approaches in fiber orientation analysis methods: a method using ellipses or ellipsoids (see Nonpatent Documents 19 and 20), and a method using combinations of particles (see Nonpatent Documents 1 and 3 to 7). Either method can be used.
Fig. 5 shows an example of a result of analysis concerning how particles in the form of a fiber pass through a clearance, using combined-dyad particles. The particles in the form of a fiber are found to be aligned in the direction of flow within the clearance. The shading of particles in Fig. 5 represents the velocity gradient in the coupling direction, determined from flow velocity at the position of each particle of the combined-dyad particles. In other words, it expresses the flow contraction/extension rate k. Here, positive values indicate contraction flow, and negative values indicate extension flow. The position at which a cylindrical fiber will buckle can be forecast by applying the buckling condition (Equation 27) in the case of a sufficiently slender fiber to the viscosity $\mu$ and the contraction rate k determined by fiber orientation analysis.

(4-3) Breakage analysis

The method for forecasting the buckling of a fiber in a flow is presented in Section (4-2), "Forecast of fiber buckling using fiber orientation analysis." However, because buckled fibers do not necessarily break, buckling is only a precondition for breakage. In order to forecast fiber length distribution, it is necessary to either forecast fiber breakage or correlate the breakage condition to the buckling condition. Considering the case of a sufficiently slender fiber ($r_0$' << 1), if $\mu k_{bu}$ is the value of $\mu k$ when equality holds for the buckling condition (Equation 27), then fiber buckling will begin at a time when $\mu k$ exceeds $\mu k_{bu}$ at a place where a fiber is present in the fluid. Breakage is thought to occur when the fiber moves to a place having a higher $\mu k$ value. The value of $\mu k$ when breakage occurs is written as $\mu k_{br}$, and the ratio of $\mu k_{br}$ to $\mu k_{bu}$ is written as $r_{br} = \mu k_{br}/\mu k_{bu}$. Because it is proportional to the fluid stress $\mu k$ acting on the surface of the fiber in the contraction flow, $r_{br}$ (>1) indicates that breakage may occur when the fluid stress acting on the fiber increases to several times its value at the time when buckling begins. Determination of the breakage threshold $\mu k_{br}$ or $r_{br}$ will now be explained.

Concerning an approach for calculating the breakage condition or threshold, a first conceivable method of determining the breakage threshold would involve structural analysis incorporating a cylindrical fiber breakage model. However, to actually perform structural analysis of breakage, a fiber breakage model would be required.

Another conceivable method for determining the breakage condition or threshold involves approximation of $r_{br}$ by means of a constant, in which $r_{br}$ is regarded as a fitting parameter and determined by matching it to experimental results. This method requires experimental data on fiber length distribution, but actually, because the value of $r_{br}$ is thought to be the same with regard to the same fibers, once a value of $r_{br}$ has been determined by fitting to specific experimental data, that value can be used for the same fibers generally. After the threshold $r_{br}$ has been obtained, $\mu k_{br}$ can be determined from the buckling condition (Equation 27) by replacing $\mu k$ with $\mu k_{br}/r_{br}$ and replacing the inequality sign with the equality sign, as follows.

$$\mu k_{br} = -\frac{\lambda_0}{4} r_{br} E\, r_0'^4 \log r_0' \qquad (28)$$

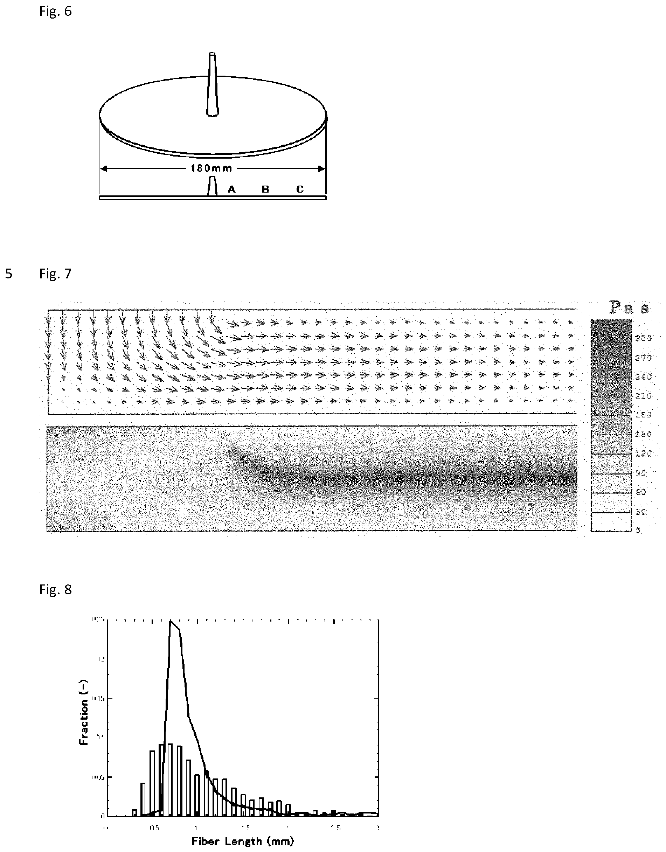

As an example of breakage forecasting analysis, the experimental measurement of fiber length distribution by Phelps et al. (see Nonpatent Documents 8 and 9) is traced to verify the extent to which fiber length distribution can be forecast by the present fiber breakage forecasting theory using the buckling condition. Phelps et al. fed a liquid containing cylindrical fibers having a diameter of 17 $\mu$m from the upper end of a central protrusion of a device shown in Fig. 6 into a disk region having a diameter of 180 mm and a thickness of 3 mm, and measured fiber length distribution at three points A, B, C on the disk (positions 15 mm, 45 mm, and 75 mm distant from the center, respectively).

In addition to measuring fiber length, Phelps et al. compared the fiber length distribution obtained using the fiber breakage forecasting theory proposed by Phelps et al. with their actual measurement data. However, the analysis by Phelps et al. ignores the device's central protrusion and addresses only the disk; and in addition, instead of fiber length distribution at the time of inflow into the device, they take measurement data of fiber length distribution at point A as the inflow condition of fiber length, and then use their analysis to forecast fiber length distribution at points B and C.

However, because flow velocity is slower toward the outside of the disk of the device shown in Fig. 6, the contraction rate, which causes buckling, is highest at the center of the disc and weakens toward the outside of the disk. Therefore, most fiber breakage as a result of buckling is thought to occur near the center of the device. In fact, measurement data by Phelps et al. shows practically the same fiber length distribution at points A, B, and C. Thus, it is doubtful whether the method of forecasting fiber length distribution at points B and C based on the input condition of the fiber length distribution data measured at point A by Phelps et al. has much significance for verification.

In the present analysis, forecasting of fiber length distribution at point A is based on fiber length distribution at a point that is further upstream. Because the papers by Phelps et al. do not mention the dimensions of the device's central protrusion, the present analysis omits the device's central protrusion, as Phelps et al. also did in their analysis, and addresses only the inner portion of the disk. In the flow field analysis, axial symmetry is assumed, and the fluid is assumed to flow downward at a constant velocity from a region having a radius of 5 mm (an approximation because the actual dimensions are unknown) at the center of the upper face of the disk. The inflow volume, viscosity model, and other conditions and parameters stated in the papers by Phelps et al. are used without modification.

With regard to the feeding of fibers, approximately 5000 combined particles mimicking the fibers of Fig. 5 are generated in a lower region of the inflow surface, and their directions at that time are assigned randomly. Because the papers by Phelps et al. do not indicate fiber length distribution at the time of inflow into the device, fiber length at the time of feeding is assumed to be 6 mm in the present analysis. Because most fibers have a length of less than 6 mm in the measurement data obtained at point A by Phelps et al., it is thought that practically all long fibers of 6 mm or longer had broken before reaching point A, becoming shorter fibers. Therefore, if fiber length at the time of inflow is set at a somewhat longer length, this is not thought to be very dependent on the results of analysis.

It is not possible to strictly reproduce the fiber length distribution measurement results of Phelps et al. due to uncertainties when tracing some points. Detailed measurement data on fiber length distribution is necessary for verification, but none can be found in the literature; so the measurement data of Phelps et al. is used in the present analysis. Thus, an object of the present analysis is not to verify the quantitative accuracy of the fiber breakage forecasting theory, but to verify whether it would be generally feasible or completely impossible to reproduce the experimental results on fiber length distribution based on this fiber breakage model.

Fig. 7 illustrates flow velocity and viscosity distribution near the center of the disk, obtained by CFD analysis. Fig. 8 plots the fiber length distribution at point A as calculated based on the present fiber breakage forecasting theory, along with the measurement data of Phelps et al. The value of 2 was used for $r_{br}$ as a result of several cycles of trial and error.

The specific method for calculation of the fiber length in Fig. 8 is as follows. First, the maximum value $\mu k_{max}$ among historical data of $\mu k$ up to point A is determined for each of the combined particles passing through point A. Next, $\mu k_{max}$ is substituted for $\mu k_{br}$ in Equation (28) to obtain $r_{0'max}$, the value of $r_0'$ (aspect ratio of the cylinder). Fiber length before and after breakage in the case of a fiber that breaks as a result of buckling is obtained as $d_f/r_{0'max}$ and $d_f/(2r_{0'max})$, respectively, using fiber diameter $d_f$ (= 17 $\mu$m), considering that the possibility of breaking in two is greatest at the center of a fiber, as shown by Fig. 4. If fiber length prior to breakage $d_f/r_{0'max}$ as obtained in this manner is greater than fiber length at the time of feeding into the device, the fiber is not broken, and the length of the fiber at the time of feeding is maintained.

In the present analysis, because fiber length at the time of feeding is assumed to be relatively long at 6 mm, it is thought that most fibers are broken before passing through point A. However, because fibers have length distribution at the time of inflow into the device in an actual experiment, short fibers are also thought to exist. Thus, it is thought that some of the fibers do not break, but pass through point A while maintaining the same length as at the time of feeding.

Fig. 8 shows that the values obtained by the present analysis differ from the actual measurements of fiber length distribution, but encompass their overall distribution, including average values. As stated above, in the present analysis, a fixed value is assumed for fiber length distribution at the time of fiber feeding, instead of actual measurement data at the time of feeding into the device; and the shape of the feeding portion of the device and the feeding position differ from those of the actual device. Considering that the fiber length distribution is generally reproduced, even under such conditions, the present fiber breakage model is thought to capture the essence of the fiber breakage phenomenon occurring in the experimental device of Phelps et al.

(5) Conclusion

A method of readily determining fluid stress distribution acting on the surface of slender cylindrical fibers in a contraction flow using CFD, etc. is proposed. A theoretical solution is derived for the case where the effects of the two ends of the cylinder are negligible, and based on the resulting fluid stress distribution, the eigenvalue problem is solved to derive a buckling condition. The buckling condition is applied to the results of fiber orientation analysis to propose a method of forecasting the position where fibers in a flow will buckle. The breakage condition is calculated using the buckling condition to propose a method of forecasting fiber breakage in the flow. The experimental results of Phelps et al. for measurement of fiber length distribution are traced, indicating that the present fiber breakage forecasting theory is effective for forecasting fiber length distribution.

(Advantageous Effects of the Embodiment)

As described above, according to the embodiment, the flow field around a cylinder in a contraction flow as addressed by Phelps et al. is calculated by a stricter method, and the eigenvalue problem is then solved with regard to buckling that is caused by the resulting fluid stress distribution around the cylinder, in order to derive the buckling condition of a cylinder placed in a contraction flow. A method of deriving the buckling condition of a fiber moving in a fluid, a method of calculating the breakage condition thereof, and a method of forecasting the fiber length distribution are thereby provided.

A preferred embodiment of the present invention is described with reference to the accompanying drawings. Needless to say, the present invention is not limited by these examples. It will be apparent to those skilled in the art that various variations and modifications can be conceived within the scope described in the claims, and naturally these are understood as falling under the technical scope of the present invention.

**Claims**

1. A method of calculating a buckling condition, which is a condition under which buckling occurs, of a cylindrical fiber moving in a fluid when placed in a contraction flow, which is a flow toward a shrinkage in the longitudinal direction of the fiber, the buckling condition calculation method comprising the steps of:

multiplying a dimensionless fluid stress distribution, uniquely determined with regard to the aspect ratio r0' of the cylindrical fiber, by $\mu k$ (where $\mu$ represents fluid viscosity and k represents the contraction rate) at a location where the cylinder is present, to obtain the fluid stress distribution acting on the cylinder surface in a contraction flow; and

using a minimum eigenvalue $\lambda 0$, which is the threshold for buckling derived from the fluid stress distribution on the cylinder surface, to derive the buckling condition, wherein

the buckling condition is represented by the following equation (where E is Young's modulus and r0' is the aspect ratio of the cylinder).

$$\mu k \geq -\frac{\lambda_0}{4} E\, r_0'^{\,4} \log r_0'$$

2. A method that uses the buckling condition described in claim 1 to calculate a breakage condition, which is a condition under which breakage occurs, of a cylindrical fiber, the breakage condition calculation method comprising the steps of:

writing the value of $\mu k$ when the buckling condition holds equality as $\mu k_{bu}$;

writing the value of $\mu k$ when the cylindrical fiber breaks as $\mu k_{br}$ and writing the ratio of $\mu k_{br}$ to $\mu k_{bu}$ as a threshold $r_{br} = \mu k_{br}/\mu k_{bu}$;

taking the threshold $r_{br}$ as a fitting parameter and setting $r_{br}$ to match experimental results or setting $r_{br}$ based on structural analysis of fiber breakage incorporating a breakage model; and

determining the value of $\mu k_{br}$ at breakage by replacing $\mu k$ with $\mu k_{br}/r_{br}$ and replacing the inequality sign with the equality sign in the buckling condition, wherein

the breakage condition is represented by the following equation.

$$\mu k_{br} = -\frac{\lambda_0}{4} r_{br} E\, r_0'^{\,4} \log r_0'$$

3. a method that uses the breakage condition described in claim 2 to forecast fiber length distribution, which is the distribution of cylindrical fiber lengths, the fiber length distribution forecasting method comprising the steps of:

determining a maximum value $\mu k_{max}$ among historical data of $\mu k$ up to a predetermined measuring point; and

calculating the cylindrical fiber's aspect ratio $r_0'_{max}$ by assigning the maximum value $\mu k_{max}$ to the breakage condition $\mu k_{br}$; wherein

cylindrical fiber diameter $d_f$ is used to determine fiber length before breakage $d_f/r_0'_{max}$ and fiber length after breakage $d_f/(2r_0'_{max})$.

Fig. 1

Fig. 2

$\delta v_z' / \delta r'$

Fig. 3

Fig. 4

Fig. 5

Fig. 6

Fig. 7

Fig. 8

## INTERNATIONAL SEARCH REPORT

| International application No. |
|---|
| PCT/JP2017/028124 |

| A. CLASSIFICATION OF SUBJECT MATTER |
|---|
| *B29C70/10*(2006.01)i, *G06F17/50*(2006.01)i |

According to International Patent Classification (IPC) or to both national classification and IPC

| B. FIELDS SEARCHED |
|---|

Minimum documentation searched (classification system followed by classification symbols)
B29C70/10, G06F17/50

Documentation searched other than minimum documentation to the extent that such documents are included in the fields searched

| Jitsuyo Shinan Koho | 1922–1996 | Jitsuyo Shinan Toroku Koho | 1996–2017 |
|---|---|---|---|
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2015-147311 A (Toray Industries, Inc.), 20 August 2015 (20.08.2015), paragraph [0018] (Family: none) | 1-3 |
| A | JP 2013-541759 A (Commonwealth Scientific and Industrial Research Organization), 14 November 2013 (14.11.2013), entire text & US 2013/0297270 A1 entire text & WO 2012/034176 A1 & EP 2616977 A1 & AU 2011301776 A & CN 103229177 A & CA 2848319 A | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 October 2017 (06.10.17) | 17 October 2017 (17.10.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/028124

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-286514 A (the Doshisha), 01 November 2007 (01.11.2007), entire text (Family: none) | 1-3 |

Form PCT/ISA/210 (continuation of second sheet) (January 2015)

<div align="center">

**INTERNATIONAL SEARCH REPORT**

</div>

| International application No. |
| --- |
| PCT/JP2017/028124 |

| **Box No. II    Observations where certain claims were found unsearchable (Continuation of item 2 of first sheet)** |
| --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III    Observations where unity of invention is lacking (Continuation of item 3 of first sheet)** |
| --- |

This International Searching Authority found multiple inventions in this international application, as follows:

Document 1: JP 2015-147311 A (Toray Industries, Inc.), 20 August 2015 (20.08.2015), paragraph [0018] (Family: none)

(Invention 1) Claim 1 has a technical feature, i.e., "a buckling condition deriving method characterized in that a buckling condition is expressed by $\mu k \geq -\lambda_0/4 \, Er_0' \, {}^4 \log r_0'$." This technical feature makes a contribution over the prior art in the light of the disclosed contents of Document 1 (in particular, see paragraph [0018]) and is thus a special technical feature.

Consequently, claim 1 is classified into Invention 1.

(Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

International application No.

PCT/JP2017/028124

Continuation of Box No.III of continuation of first sheet(2)

(Invention 2) Claims 2 to 3 are dependent on claim 1 classified into Invention 1, but are an invention relating to a method for computing a rupture condition which includes, as a technical feature, an equation that specifies a rupture condition, the equation being acquired by transforming an equation indicative of the aforementioned buckling condition specified by claim 1. Thus, claims 2 to 3 cannot be said to have the same special technical feature as or one corresponding to that of claim 1 classified into Invention 1.

In addition, claims 2-3 have no relationship such that these claims are substantially same as or equivalent to claim 1 classified into Invention 1.

Consequently, claims 2-3 cannot be classified into Invention 1.

Then, claims 2 to 3 are classified into Invention 2 because the claims have a special technical feature, i.e., "a method for computing a rupture condition, the method being characterized in that the rupture condition is expressed by $\mu k_{br} = -\lambda_0 / 4 r_{br} E r_0'^4 \log r_0'$."

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OKADA, Y. ; R. NAKANO.** *Seikei-Kakou,* 2015, vol. 27, 134
- **MASAKI, S. ; A. NAKAYAMA ; T. KAJIWARA.** *Seikei-Kakou,* 2015, vol. 27, 533
- **YAMAMOTO, S. ; T. MATSUOKA.** *J. Chem. Phys.,* 1993, vol. 98, 644
- **YAMAMOTO, S. ; T. MATSUOKA.** *Polymer Eng. Sci.,* 1995, vol. 35, 1022
- **YAMAMOTO, S.** *R&D review of Toyota CRDL,* 1998, vol. 33, 63
- **YAMAMOTO, S. ; T. MATSUOKA.** *Seikei-Kakou,* 1999, vol. 11, 510
- **YAMAMOTO, S.** *Journal of the Society of Rheology,* 2001, vol. 29, 185
- **PHELPS, J. H.** Ph.D. Thesis. University of Illinois at Urbana-Champaign, 2009
- **PHELPS, J. H. ; A.I.A. EL-RAHMAN ; V. KUNC ; C.L. TUCKER III.** *Composites: Part A,* 2013, vol. 51, 11
- **NGUYEN, B.N. ; X. JIN ; J. WANG ; J. H. PHELPS ; C. L. TUCKER III ; V. KUNC ; S.K. BAPANAPALLI ; M.T. SMITH.** FY 2010 Quarterly Report, PNNL-19185. Pacific Northwest National Laboratory, 2010

- **TATSUMI, T.** Ryutai Rikigaku (Fluid Dynamics). Baifukan Co., Ltd, 1982
- **YOSHIZAWA, B.** Ryutai Rikigaku (Fluid Dynamics). University of Tokyo Press, 2001
- **FORGACS, O.L. ; S.G. MASON.** *J. Colloid Interface Sci.,* 1959, vol. 14, 457
- **FORGACS, O.L. ; S.G. MASON.** *J. Colloid Interface Sci.,* 1959, vol. 14, 473
- **SALINAS, A. ; J.F.T. PITTMAN.** *Polymer Eng. Sci.,* 1981, vol. 21, 23
- **TURKOVICH, R. ; L. ERWIN.** *Polymer Eng. Sci.,* 1983, vol. 23, 743
- **NAKAMURA, K.** Hinyuton Ryutai Rikigaku (Non-Newtonian Fluid Dynamics). Corona Publishing Co., Ltd, 1997
- **DINH, S.M. ; R.C. ARMSTRONG.** *J. Rheology,* 1984, vol. 28, 207
- **JEFFERY, G.B.** *Proc. R. Soc. London, Ser. A,* 1922, vol. 102, 161
- **ADVANI, S.G. ; C.L. TUCKER III.** *J. Rheology,* 1987, vol. 31, 751